# EUROPÄISCHE PATENTANMELDUNG

(11) **EP 0 955 271 A2**
(43) Veröffentlichungstag der Anmeldung: **10.11.1999**
(21) Anmeldenummer: 99103570.0
(22) Anmeldetag: 24.02.1999
(51) Int. Cl.: C03B 5/235, C03B 5/237

(54) **Verfahren und Anordnung zum Schmelzen von Glas in U-Flammen- und Querflammen-Wannenöfen unter Reduzierung der Gehalte an NOx und CO in den Abgasen**

(30) Priorität: 28.04.1998 DE 19818953
(71) Anmelder: Beteiligungen Sorg GmbH & Co. KG, D-97816 Lohr (DE)
(72) Erfinder: Pieper, Helmut, Dipl.-Ing., 97816 Lohr am Main (DE)
(74) Vertreter: Zapfe, Hans, Dipl.-Ing.

(57) **Zusammenfassung**

Beim Schmelzen von Glas aus Beschickungsgut (12) in Wannenöfen (1) mit Brennern (11) und mit Regeneratoren (6) für die Wiedergewinnung von Abwärme werden im Bereich der Flammenwurzeln Sauerstoff und Primärbrennstoffe zur Deckung des Wärmebedarfs für den Schmelzprozeß bei schwach unterstöchiometrischen Bedingungen zugeführt. Zur weiteren Reduzierung der Gehalte an NOₓ und CO in den Abgasen durch Nachverbrennung bzw. Nachoxidation jenseits der Flammenenden werden Sekundärbrennstoffe und stromabwärts weitere Luft zugeführt, um durch den Sekundärbrennstoff in oder über der Kammergitterung (5a, 6a) NOₓ zu reduzieren und stromabwärt durch die Luftzufuhr eine Nachverbrennung bzw. Nachoxidation durchzuführen, so daß schließlich eine zumindest weitgehend stöchiometrische Verbrennung erfolgt. Die Abgase werden vor dem Eintritt in einen Abgaskamin (15) zur Vorwärmung des Beschickungsguts (12) in mindestens einem Gutvorwärmer (13) verwendet. Um eine nahezu vollständige Rückgewinnung der Energieinhalte der Brennstoffe und einen kontinuierlichen Strom des Beschickungsguts zu gewährleisten, wird die Temperatur der aus den Regeneratoren (6) stammenden Abgase vor dem Eintritt in den mindestens einen Gutvorwärmer (13) gemessen, und die Menge der Sekundärbrennstoffe wird in Abhängigkeit von den gemessenen Temperaturwerten geregelt.

## Beschreibung

Die Erfindung betrifft ein Verfahren zum Schmelzen von Glas aus Beschickungsgut in U-Flammen- und Querflammenwannenöfen mit Brennern für fossile Brennstoffe und mit Regeneratoren für die Wiedergewinnung von Abwärme zum Vorwärmen der Verbrennungsluft, wobei im Bereich der Flammenwurzeln vorgegebene Mengen von Sauerstoff und Primärbrennstoffen zur Deckung des Wärmebedarfs für den Schmelzprozeß bei schwach unterstöchiometrischen Bedingungen zugeführt werden, wobei zur weiteren Reduzierung der Gehalte an NOₓ und CO in den Abgasen durch Nachverbrennung bzw. Nachoxidation jenseits der Flammenenden Sekundärbrennstoffe und weitere Luft zugeführt werden, derart, daß schließlich eine zumindest weitgehend stöchiometrische Verbrennung erfolgt, und wobei die Abgase vor dem Eintritt in einen Abgaskamin zur Vorwärmung des Beschickungsguts in mindestens einem Gutvorwärmer verwendet werden.

Bei Glasschmelzöfen mit Regenerativwannen - seien es seitenbeheizte bzw. Querflammenwannen oder auch U-Flammenwannen - liegen die Temperaturen nach dem Wechsel der Strömungsrichtung normalerweise in einem Bereich von 400 bis 500 °C. Gleichzeitig findet man hierbei Sauerstoffkonzentrationen von 4 bis 5 %, da sowohl die Regeneratorkammern als auch die nachgeschalteten Wechselschieber nie vollständig dicht zu halten sind. Mit den angegebenen Temperaturen läßt sich zwar in Gutvorwärmern eine Vorwärmung des Beschickungsguts durchführen, die zu erreichende Temperatur liegt aber nur bei etwa 300 °C. Eine Amortisation eines solchen Gutvorwärmers und der zugehörigen Nebenaggregate ist damit nur sehr langfristig möglich.

Verfahren zur Reduktion von NOₓ sind an sich bekannt. Bei einem als "Gas Reburn"-Verfahren bekannten Verfahren besteht der Nachteil, daß die zusätzliche Verbrennungsluft in einem Teil der Regeneratorkammer zugegeben werden müßte, der relativ unzugänglich ist, nämlich in der Kammergitterung, weil sonst die Zeit für eine Nachverbrennung oder Nachoxidation nicht ausreicht, um z. B. CO quantitativ zu CO₂ aufzuoxidieren. Es muß daher mit zu hohen CO-Konzentrationen hinter dem Filter gerechnet werden. Weiterhin hat dieses als "Gas Reburn"-Verfahren bekannt gewordene Verfahren den Nachteil, daß die Energie der zusätzlich zugeführten Brennstoffmenge, der sogenannten Sekundärbrennstoffmenge, als verloren betrachtet werden muß, es sein denn,. sie wird über einen nachgeschalteten Boiler für eine Heißwasser- oder Dampferzeugung benutzt. Dies ist jedoch nicht so wirtschaftlich wie die Methode, die Energie dem Prozeß direkt wieder zuzufühten.

Die nachstehend erörterten Schriften befassen sich sämtlich mit dem Problem, beim Schmelzen von Glas in Wannenöfen, denen Brenner für fossile Brennstoffe und Regenerativ-Wärmetauscher zugeordnet sind, den Stickoxidgehalt in den Abgasen zur verringern. Dabei können die Öfen sowohl als Querflammenöfen als auch als U-Flammenöfen ausgeführt sein. Diesen Öfen ist gemeinsam, daß die Flammenrichtung alternierend, z.B. alle 20 Mlnuten, umgekehrt wird. Der Flammenwurzel wird dabei nur ein Teil des Brennstoffs zugeführt (nachstehend als "Primärbrennstoff" bezeichnet), jenseits des Flammenendes und innerhalb des gegenüberliegenden Brennerhalses und/oder des Regenerativ-Wärmetauschers wird zum Zwecke einer Reduzierung des Stickoxidgehaltes ein weiterer Teil des Brennstoffs zugeführt (nachstehend als "Sekundärbrennstoff" bezeichnet), und ggf. wird stromabwärts weiterer Sauerstoff zugeführt, so daß - in der Summe gesehen - eine stöchiometrische Verbrennung stattfindet.

Für dieses Verfahren hat sich in der Fachwelt auch der Ausdruck "Gas Reburn"-Verfahren durchgesetzt. Die beschriebenen Verfahrensmaßnahmen geschehen in der Erwartung, daß die Wärmeenergie des nach Verlassen des Wannenraums zugeführten Sekundärbrennstoffs, dessen Anteil zwischen 5 % und 17 % des gesamten Brennstoffbedarfs liegen kann, nach Zwischenspeicherung im Wärmetauscher größtenteils wieder an die zugeführte Verbrennungsluft abgegeben werden kann, um das "Energieopfer" zur Reinhaltung der Luft möglichst weitgehend wieder zu kompensieren. Diese Erwartung ist aber praktisch nicht zu erfüllen, weil die Wirkungsgrade moderner Regeneratoren nicht weiter gesteigert werden können.

Durch die US-A-4 372 770 und die entsprechende FR-A-2 510 423 ist es bekannt, bei der Nachverbrennung zur Verringerung der Stickoxide zusätzlich Ammoniak bei Gastemperaturen zwischen 870 °C bis 1090 °C zuzusetzen. Es wird weiterhin angegeben, daß der Sekundärbrennstoff vor der Ammoniakzufuhr bei Gastemperaturen von mindestens 1420 °C zugesetzt werden sollte, um bereits einen Teil der Stickoxide zu zerstören. Dies aber erfordert die Zufuhr erheblicher Mengen von Sekundärbrennstoff und führt zu einer hohen thermischen Belastung der Werkstoffe der Wärmetauscher. Außerdem sind die Wärmetauscher in Strömungsrichtung in Primär- und Sekundär-Regeneratoren unterteilt, wobei der Sekundärbrennstoff bevorzugt vor dem Primär-Regenerator und das Ammoniak zwischen den beiden Regeneratoren zugeführt werden soll. Der Bauaufwand und die Betriebskosten sind also beträchtlich. Die Abgastemperaturen zum Kamin hin werden mit 700 °C bis 1090 °C angegeben und führen zu beträchtlichen Energieverlusten. Es wird auch bereits darauf hingewiesen, daß in der Kammergitterung der Regeneratoren nur eine schlechte Durchmischung der Reaktionskomponenten möglich ist.

Ein ähnliches Verfahren mit hohen Reaktions- und Abgastemperaturen und zweigeteilten Regeneratoren ist in der US-A-4 328 020 beschrieben.

Durch den Aufsatz von Koppang/Moyeda/Donaldson "Glass Furnace NOx Control with Gas Reburn", veröffentlicht von der AMERICAN CERAMIC SOCIETY", 1996, Seiten 19 bis 35, ISSN Nr. 0196-6219, ist es bekannt, daß das Verhältnis des Endgehalts zum Anfangsgehalt von NOx bei steigender Injektionstemperatur des Sekundärbrennstoffs von 42-46 % auf 15-30 % reduziert werden kann. Die besagte Injektionstemperatur wird dabei von 1049 °C auf 1621 °C gesteigert. Die Studie kommt zu dem Ergebnis, daß etwa 50-60 % der Energie des Sekundärbrennstoffs in den Regeneratoren wiedergewonnen werden kann, wobei deren Temperatur um etwa 66 °C ansteigt. Es ist weiterhin davon die Rede, daß für den Mischvorgang und die chemische Reduktion eine Mindestzeit von etwa 0,3 sec. (praktisch: 0,5 sec.) zur Verfügung stehen muß. Auch diese Autoren kommen zu dem Schluß, daß hierbei örtliche Gastemperaturen von mindestens 760-871 °C erforderlich sind. Die Studie kommt zu der weiteren Erkenntnis, daß die Reduktion der Stickoxide zu Stickstoff in sehr starkem Maße von der Stöchiometrie in der Reburn-Zone abhängt, wobei die Optima im unterstöchiometrischen Bereich zwischen 0,8 und 0,9 liegen. Es wird weiterhin angesprochen, daß die ungünstige Kostenbilanz vermutlich dadurch teilweise verbessert werden kann, daß man die Abgase zur Vorwärmung von Beschickungsgut des Glasschmelzofens verwendet. Dies ist aber bei den angegebenen hohenTemperaturen nicht möglich, weil das Beschickungsgut in den Gutvorwärmern verklebt und nicht mehr nachrutscht.

In den EP 0 599 547 B1 und EP 0 599 548 B1 wird von den Überlegungen ausgegangen, daß eine unterstöchiometrische Verbrennung, also eine Verbrennung mit einem Überschuß an Primärbrennstoff bzw. mit einem Sauerstoffmangel, über der Glasschmelze eine schlechte Glasqualität erwarten läßt. Es wird daher zur Abhilfe vorgeschlagen, die Regeneratoren so dicht auszuführen, daß keine Luft unkontrolliert eintreten kann, und das Verfahren so zu betreiben, daß die Abgase am Ofenausgang und/oder am Regeneratoreingang aufgrund unterstöchiometrischer Verbrennung im Ofen unverbrannten Primärbrennstoff enthalten, der auf seinem weiteren Wege in den Regeneratoren einer Pyrolyse unterliegt, durch die Radikale gebildet werden, die eine Reduktion von Stickoxiden zu Stickstoff herbeiführen.

Eine Nachverbrennung durch Zufuhr von Luft erfolgt dabei erst jenseits der Kammergitterungen, d.h. an den unteren Ausgängen der Regeneratoren und damit kurz vor dem Eintritt in den Abgaskamin. Die Temperatur an dieser Stelle soll dabei mindestens 650 °C betragen, vorzugsweise aber höher liegen. Um entsprechend hohe Energieverluste zu reduzieren, wird vorgeschlagen, im Kamin einen Abhitzekessel anzuordnen. Außerdem wird - ohne Angabe von Lösungen - vorgeschlagen, die Abgase abzukühlen, bevor sie in Gasaufbereitungsanlagen und/oder Elektrofilter eintreten. Eine ausreichende Abdichtung der Regeneratoren ist aber praktisch, bzw. mit vertretbarem Aufwand, nicht zu erreichen

Durch die EP 0 758 628 A2 und die EP 0 759 412 A2 ist es weiterhin bekannt, in Glasofenabgasen, die brennbare Stoffe einschließlich CO enthalten, durch Luftzufuhr und Verbrennung des CO unterhalb der Kammergitterung die Gehalte an CO und NOₓ zu verringern. Auch hierbei werden abgedichtete Regeneratoren und die Zufuhr von solchen Brennstoffüberschüssen in die Ofenkammer oder in die abgedichteten Regeneratoren vorausgesetzt, daß die Reaktionstemperatur oberhalb von etwa 650 °C liegt. Es bleibt jedoch offen, auf welche Weise die für eine Gutvorwärmung zu hohe Abgastemperatur durch eine Wärmerückgewinnung abgesenkt werden könnte und wie man eine ausreichende Verweilzeit erreicht.

Allen bekannten Lösungen ist gemeinsam, daß den Gasmischungen keine ausreichenden Weglängen bzw. Verweilzeiten zur vollständigen Durchmischung und Nachoxidation zur Verfügung stehen, so daß die Abgastemperatur unerträglich hoch ist, und daß auch die Verluste durch nicht ausgenutzte und nicht ausnutzbare Energie des Sekundärbrennstoffes nur zu einem geringen Teil kompensiert werden können.

Die Beseitigung von sowohl NOₓ als auch CO ist nämlich mit guten Wirkungsgraden nicht ohne weiteres durchzuführen, weil dies auf Verfahrensabläufen beruht, die sich diametral entgegenstehen. Hierauf wird unter Bezugnahme auf die bekannten Boudouardschen Gleichgewichtsbedingungen weiter unten noch näher eingegangen werden, gemäß welchen sich in Gegenwart von Kohlenstoff oder Kohlenstoffverbindungen oberhalb von 400 °C mit steigenden Temperaturen das Gleichgewicht in Richtung CO verschiebt. So besteht bei 650 °C ein Gleichgewicht zwischen etwa 60 Vol.-% CO₂ und 40 Vol.-% CO.

Der Erfindung liegt daher die Aufgabe zugrunde, ein Verfahren und eine Regelanordnung anzugeben, durch die die Mängel der bekannten Verfahren beseitigt werden und durch die die Gehalte sowohl an NOₓ als auch an CO in den Abgasen sowie innerhalb des Rahmens der technischen Möglichkeiten eine nahezu vollständige Rückgewinnung der Energieinhalte der überschüssigen Brennstoffmengen möglich ist, ohne daß der Strom des Beschickungsguts in den Gutvorwärmern und den Chargiereinrichtungen am Beschickungsende des Ofens zum Erliegen kommt.

Die Lösung der gestellten Aufgabe erfolgt bei dem eingangs beschriebenen Verfahren erfindungsgemäß dadurch, daß die Temperatur der aus den Regeneratoren stammenden Abgase vor dem Eintritt in den mindestens einen Gutvorwärmer gemessen wird und daß die Menge der Sekundärbrennstoffe in Abhängigkeit von den gemessenen Temperaturwerten so geregelt wird, daß die Temperatur der Abgase vor dem Eintritt in den mindestens einen Gutvorwärmer mindestens 400 °C beträgt und möglichst knapp unter derjenigen Temperatur liegt, bei der das Beschickungsgut zum Verkleben neigt.

Bei dem erfindungsgemäßen Verfahren handelt es sich um eine Kombination von Gutvorwärmung einerseits und Aufheizung des Abgases andererseits, und zwar in einer Art und Weise, die das NOₓ im Abgas sehr stark vermindert. Es hat sich beispielsweise herausgestellt, daß der Wirkungsgrad der Schmelzwanne bei einer Ausgangstemperatur des Abgases von 400 °C und bei 4 % Sauerstoff im Abgas durch Vorwärmung des Beschickungsguts von 50 auf 55 % angehoben werden kann. Wird das Abgas durch zusätzlich an den Brennerdüsen zugeführten Brennstoff auf 600 °C aufgeheizt, ergibt sich der gleiche Wirkungsgrad mit dem zusätzlichen Vorteil, daß das NOₓ sehr stark reduziert wird. Außerdem kommt das Beschickungsgut mit höheren Temperaturen in die Schmelzwanne, so daß mit einer Leistungssteigerung gerechnet werden kann. Die NOₓ-Reduzierung geschieht somit ohne zusätzliche Betriebskosten.

Die Installation für die zusätzliche NOₓ-Reduzierung besteht im Prinzip aus einem Brennstoffregler in einem Bypass der Brennstoffleitung, durch den die Brennstoffmenge entsprechend der Temperatur vor dem Gutvorwärmer geregelt wird. Die geregelte Brennstoffmenge wird dem Abgasstrom jeweils auf der abziehenden Seite der Regenerativwanne zugesetzt. Die Temperaturregelung wird gleichfalls der jeweils abziehenden Seite zugeschaltet. Infolge der Aufheizung des Abgases auf 600 bzw. 650 °C ist die Abgastemperatur selbst bei Erreichen einer Gutvorwärmtemperatur von 450 °C höher als bei der Vorwärmung des Beschickungsguts mit einer Abgastemperatur von nur 400 °C, so daß sichergestellt wird, daß die Temperatur in der Abgasstrecke nirgendwo den Taupunkt von Abgaskomponenten unterschreitet.

Insbesondere sind vor nachgeschalteten Elektrofiltern sehr oft Absorber eingesetzt, die mit Kalziumhydroxid betrieben werden und die das SO₂ im Abgas absorbieren. Dieser Prozeß der SOₓ-Absorption läuft bei höheren Temperaturen vergleichsweise besser ab als bei niedrigen Temperaturen. Auf der gesamten Abgasstrecke sind natürlich im Absorber und im Filter Wärmeverluste zu verzeichnen, so daß durch die Erfindung auch gewährleistet ist, daß am Kaminausgang die Kondensationstemperatur des SOₓ im Abgas noch überschriften wird. Durch das erfindungsgemäße Verfahren können die Temperaturen angehoben, so daß der Sicherheitsabstand zum Säuretaupunkt auf jeden Fall einstellbar bleibt. Von ganz wesentlicher Bedeutung ist jedoch, daß bei dem erfindungsgemäßen Verfahren durch den Einsatz des Gutvorwärmers in der Abgasstrecke die Verweilzeit des Abgases in einem Temperaturbereich, in dem infolge des Boudouardschen Gleichgewichts die Verschiebung von CO zu CO₂ noch in einem günstigen Zeitrahmen abläuft, so verlängert wird, daß auch das CO fast quantitativ zu CO₂ aufoxidiert wird, ohne daß die Luft in einem unzugänglichen Teil der Regenerationskammer zugegeben werden müßte.

Die Verringerung des CO-Gehalts erfolgt dabei zeitlich versetzt gegenüber der Verringerung des NOₓ-Gehalts, und zwar durch die Oxidation des entstehenden CO bei verringerter Gasgeschwindigkeit in den Gutvorwärmern bei Temperaturen, bei denen die CO-Oxidation auch ohne Verbrennung noch ausreichend schnell abläuft.

Es ist dabei besonders vorteilhaft, wenn - entweder einzeln oder in Kombination -:
* die Verbrennungsluft - soweit erforderlich - zur Nachverbrennung unterhalb von Kammergitterungen der Regeneratoren in die Abgase eingespeist wird,
* die Nachoxidation mindestens teilweise in dem mindestens einen Gutvorwärmer durchgeführt wird,
* jeweils zwischen der Abgasleitung vom Regenerator zum Gutvorwärmer und der Abgasleitung vom Gutvorwärmer zum Kamin relativ zum Gutvorwärmer eine Bypass-Leitung mit einem Absperrventil angeordnet ist, das bei Umkehr der Strömungsrichtung umgesteuert wird,
* die den Brennern zugeführten Mengen an Primär- und Sekundärbrennstoffen in der Weise geregelt werden, daß während der Phase der Wannenbeheizung schmelzbedingte Mengen an Primärbrennstoffen über eine Hauptgasleitung mit einem ersten geöffneten Absperrventil zugeführt werden, und daß während der Phase der Nachverbrennung über eine zur Hauptgasleitung parallele Bypass-Leitung mit einem Regelventil und mit mindestens einem zweiten geöffneten Absperrventil nach Maßgabe der Temperaturmessung der Abgase vor dem Eintritt in den Gutvorwärmer mittels des Regelventils solche Mengen an Sekundärbrennstoffen zugeführt werden, daß die Temperatur der Abgase vor dem Eintritt in den Gutvorwärmer mindestens 400 °C beträgt und möglichst knapp unter derjenigen Temperatur liegt, bei der das Beschickungsgut zum Verkleben neigt, und wenn Absperrventile in der Hauptleitung und in der Bypass-Leitung nach Maßgabe der Strömungsrichtungsumkehr der Verbrennungsgase über der Glasschmelze alternierend umgeschaltet werden.

Die Erfindung betrifft auch eine Regelanordnung für Verfahren zum Schmelzen von Glas aus Beschickungsgut in U-Flammen- und Querflammenwannenöfen mit Brennern für fossile Brennstoffe und mit Regeneratoren für die Wiedergewinnung von Abwärme zum Vorwärmen der Verbrennungsluft, wobei im Bereich der Flammenwurzeln vorgegebene Mengen von Sauerstoff und Primärbrennstoffen zur Deckung des Wärmebedarfs für den Schmelzprozeß bei unterstöchiometrischen Bedingungen zuführbar sind, wobei zur weiteren Reduzierung der Gehalte an NOₓ und CO in den Abgasen durch Nachverbrennung bzw. Nachoxidation jenseits der Flammenenden Sekundärbrennstoffe und weitere Luft zuführbar sind, derart, daß schließlich eine zumindest weitgehend stöchiometrische Verbrennung bzw. Oxidation erfolgt, und wobei die Abgase vor dem Eintritt in einen Abgaskamin zur Vorwärmungs des Beschickungsguts mindestens einem Gutvorwärmer zuführbar sind.

Zur Lösung der gleichen Aufgabe ist eine solche Regelanordnung erfindungsgemäß dadurch kennzeichnet, daß in je einer Abgasleitung für die aus dem betreffenden Regenerator stammenden Abgase vor dem Eintritt in den mindestens einen Gutvorwärmer je ein Temperaturfühler zum Messen der Abgastemperatur angeordnet ist, daß der Ausgang des Temperaturfühlers einer Steueranordnung mit einem Regler und einem Regelventil aufgeschaltet ist, durch die die Menge der Sekundärbrennstoffe in Abhängigkeit von den gemessenen Temperaturwerten derart regelbar sind, daß die Temperatur der Abgase vor dem Eintritt in jeden Gutvorwärmer mindestens 400 °C beträgt und möglichst knapp unter derjenigen Temperatur liegt, bei der das Beschickungsgut zum Verkleben neigt.

Es ist dabei wiederum besonders vorteilhaft, wenn im Zuge weiterer Ausgestaltungen der Erfindung - entweder einzeln oder in Kombination -:
* in jedem Regelsystem zur Regelung der den Brennern zugeführten Mengen an Primär- und Sekundärbrennstoffen
   a) eine Hauptgasleitung für die Primärbrennstoffe mit einem ersten Absperrventil und
   b) eine zur Hauptgasleitung parallele Bypass-Leitung für die Sekundärbrennstoffe mit einer Steueranordnung und einem Regelventil und mit mindestens einem zweiten Absperrventil vorgesehen sind, wenn
   c) der Ausgang des Temperaturfühlers der Steueranordnung und dem Regelventil in der Bypass-Leitung über einen Regler in der Weise aufgeschaltet ist, daß den Abgasen vor dem Eintritt in den Gutvorwärmer mittels des Regelventils solche Mengen an Sekundärbrennstoffen zuführbar sind, daß die Temperatur der Abgase vor dem Eintritt in den Gutvorwärmer mindestens 400 °C beträgt und möglichst knapp unter derjenigen Temperatur liegt, bei der das Beschickungsgut zum Verkleben neigt, und wenn
   d) die Absperrventile in der Hauptleitung und in der Bypass-Leitung nach Maßgabe der Strömungsrichtungsumkehr der Verbrennungsgase über der Glasschmelze durch die Steueranordnung alternierend umschaltbar sind,
* zwischen jeder Abgasleitung von den Regeneratoren zum Gutvorwärmer und jeder Abgasleitung vom Gutvorwärmer zum Kamin relativ zum Gutvorwärmer eine Bypass-Leitung mit einem Absperrventil angeordnet ist, das bei Umkehr der Strömungsrichtung umsteuerbar ist.

Ein Ausführungsbeispiel des Erfindungsgegenstandes und seine Wirkungsweise werden nachfolgend anhand der Figuren 1 bis 4 näher erläutert.

Es zeigen:
- Figur 1: einen vertikalen Längsschnitt durch einen U-Flammenwannenofen und einen von zwei Regeneratoren entlang der Linie I-I in Figur 2,
- Figur 2: eine Draufsicht auf den Gegenstand von Figur 1, teilweise nach oben geöffnet,
- Figur 3: den Ausschnitt im Kreis III in Figur 1 in stark vergrößertem Maßstab mit einer schematischen Steuerschaltung, und
- Figur 4: das Boudouardsche Gleichgewichtsdiagramm.

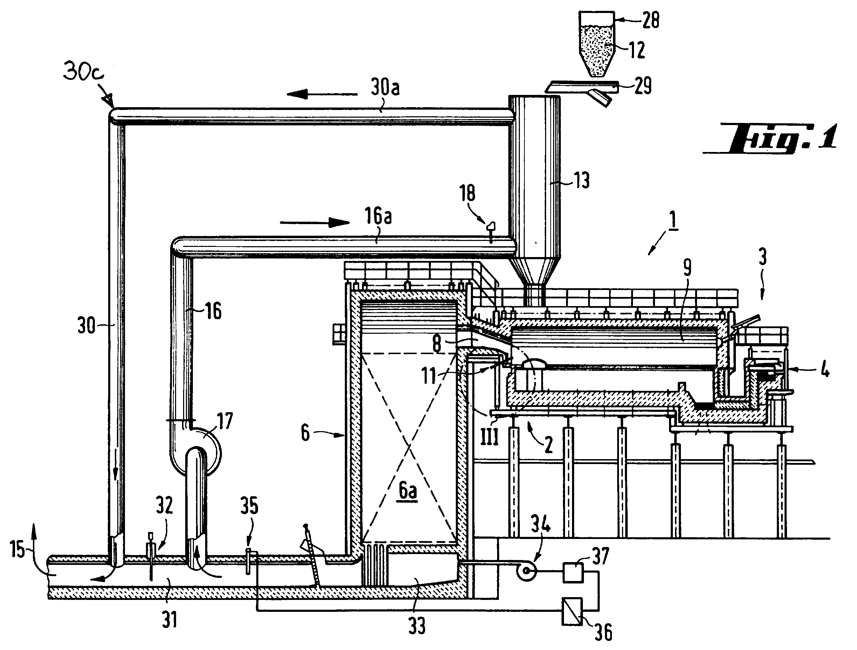

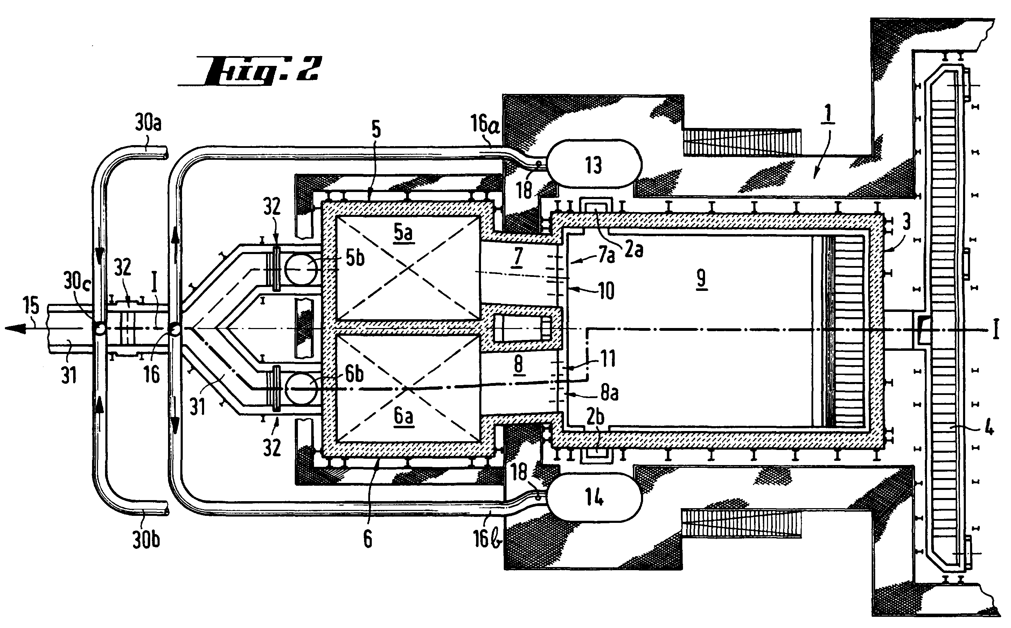

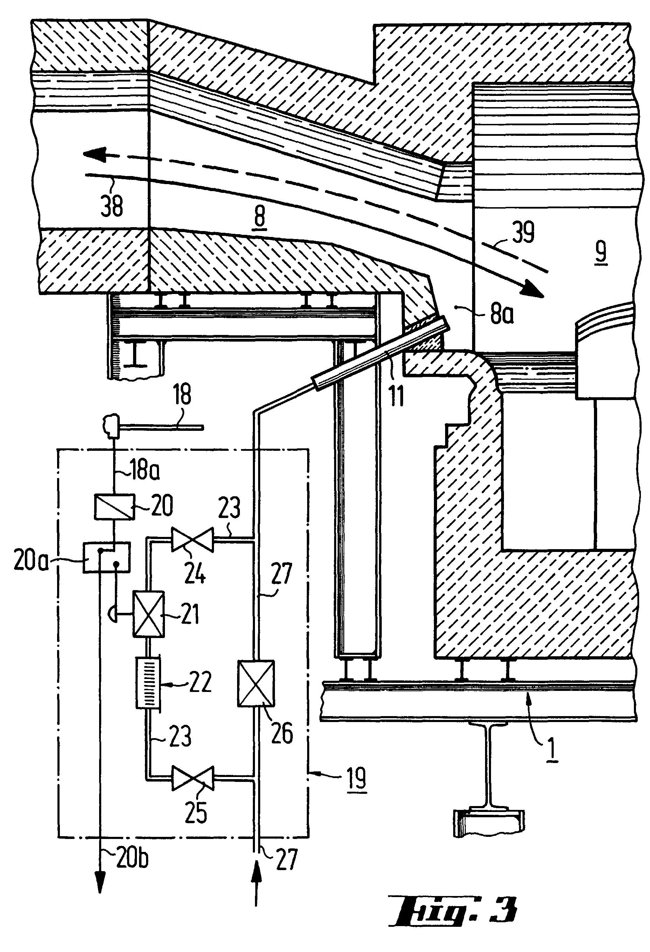

In den Figuren 1 und 2 ist ein U-Flammenwannenofen 1 (nachfolgend kurz als "Ofen" bezeichnet) gezeigt, der ein Beschickungsende 2 mit zwei seitlichen Dog-houses 2a und 2b und ein Entnahmeende 3 besitzt, das mit einer Verteilerwanne 4 verbunden ist. Dem Beschickungsende 2 sind zwei Regeneratoren 5 und 6 mit je einer Kammergitterung 5a und 6a für die Wiedergewinnung von Abwärme zum Vorwärmen der Verbrennungsluft vorgelagert, die über Strömungskanäle 7 und 8 mit dem Brennraum 9 des Ofens 1 verbunden sind. Die Regeneratoren 5 und 6 werden alternierend mit einer periodischen Strömungsumkehr betrieben (Pfeile 38 und 39 in Figur 3). Die Primärluftzufuhr zu den Regeneratoren 5 und 6 erfolgt durch Primärluftöffnungen 5b und 6b.

Die Strömungskanäle 7 und 8 enden auf der Ofenseite in Brennermäulern 7a und 8a, die mit je einer Gruppe von vier Brennerlanzen 10 und 11 (strichpunktiert angedeutet) in Unterbank-Anordnung bestückt sind (Figur 3). Gemäß Figur 2 ist die Anordnung spiegelsymmetrisch aufgebaut. Da die Betriebsweise jedoch bekannt ist, werden Einzelheiten nicht näher beschrieben.

Im Bereich der Brennerlanzen 10 und 11 bzw. der Flammenwurzeln werden auf jeweils einer Ofenseite vorgegebene Mengen von Sauerstoff und Primärbrennstoffen zur Deckung des Wärmebedarfs für den Schmelzprozeß bei schwach unterstöchiometrischen Bedingungen und geringeren NOₓ-Gehalten in den Abgasen zugeführt. Zur weiteren Reduzierung des NOₓ-Gehalts in den Abgasen durch Nachverbrennung werden jenseits der Flammenenden durch die jeweils anderen Brennerlanzen 10 bzw. 11 Sekundärbrennstoffe zugeführt, derart, daß schließlich unter weiterer, stromabwärts erfolgender Luftzufuhr eine zumindest weitgehend stöchiometrische Verbrennung erfolgt. Die Abgase aus den Regeneratoren 5 und 6 werden über eine Haupt-Abgasleitung 31 schließlich einem nur angedeuteten Kamin 15 zugeführt.

Über jedem Dog-house 2a und 2b ist zur Vorwärmung des Beschickungsguts 12 ein Gutvorwärmer 13 bzw. 14 angeordnet, dem die Abgase der Regeneratoren 5 und 6 vor dem Eintritt in den Abgaskamin 15 zugeführt werden. Dies geschieht durch eine an die Haupt-Abgasleitung 31 angeschlossene weitere Abgasleitung 16, in der ein Gebläse 17 angeordnet ist. Die Abgasleitung 16 verzweigt sich - zur Parallelschaltung der Gutvorwärmer 13 bzw. 14 - in parallele Abgasleitungen 16a und 16b (Figur 2). In jeder der Abgasleitungen 16a und 16b ist unmittelbar vor dem Eintritt in den Gutvorwärmer 13 bzw. 14 ein Temperaturfühler 18 zum Messen der Abgastemperatur angeordnet.

Gemäß Figur 3 ist der Ausgang 18a des Temperaturfühlers 18 einer Steueranordnung 19 (strichpunktiert umrandet) mit einem Regler 20 und einem Regelventil 21 aufgeschaltet, durch das die Menge der Sekundärbrennstoffe in Abhängigkeit von den gemessenen Temperaturwerten geregelt wird. Die Brennstoffmenge wird durch einen Mengenmesser 22 angezeigt. Das Regelventil 21 und der Mengenmesser 22 liegen in einer Bypass-Leitung 23, in der auch zwei Absperrventile 24 und 25 angeordnet sind. Die Bypass-Leitung 23 umgeht ein Absperrventil 26, das in einer Hauptleitung 27 für die Brennstoffe angeordnet ist und seine Steuerbefehle gleichfalls von der Steuerschaltung 19 erhält. In der Reburn-Phase sind die Absperrventile 24 und 25 geöffnet, und das Absperrventil 26 ist geschlossen. Durch einen Umschalter 20a kann der Ausgang des Reglers 20 über eine Leitung 20b alternierend einer parallelen Steueranordnung für die jeweils andere Brennergruppe aufgeschaltet werden.

Die Regelung geschieht in der Weise, daß die Temperatur der Abgase vor dem Eintritt in jeden Gutvorwärmer 13 bzw. 14 mindestens 400 °C beträgt und möglichst knapp unter derjenigen Temperatur liegt, bei der das Beschickungsgut zum Verkleben neigt. Erfahrungsgemäß kann die Eintrittstemperatur der Abgase in die Gutvorwärmer 13 bzw. 14 zwischen 600 °C und 650 °C gewählt werden. Das Beschickungsgut 12 befindet sich anfänglich in einem Silo 28 und wird von hier über einen Vibrationsförderer 29 in den jeweiligen Gutvorwärmer 13 bzw. 14 gefördert.

Das Absperrventil 26 in der Hauptleitung 27 und die Absperrventile 24 und 25 in der Bypass-Leitung 23 werden nach Maßgabe der Strömungsrichtungsumkehr der Verbrennungsgase über der Glasschmelze durch eine nicht gezeigte Steueranordnung alternierend umgeschaltet. Der Umschaltzyklus beträgt etwa 20 Minuten.

Von den beiden - parallel geschalteten - Gutvorwärmern 13 und 14 führen zwei Abgasleitungen 30a und 30b zu einer Einmündungsstelle 30c in eine gemeinsame Abgasleitung 30, die wiederum in die Haupt-Abgasleitung 31 einmündet.

Um einen Strömungskurzschluß zu vermeiden, der zu einer Umgehung der Gutvorwärmer 13 und 14 fuhren würde, und/oder, um eine Rücksaugung der Abgase durch das Gebläse 17 zu verhindern, sind in der Haupt-Abgasleitung 31 drei steuerbare Schieberventile 32 angeordnedt.

Jenseits der Kammergitterungen 5a und 6a wird im Kammersockel 33 über je ein Gebläse 34 weitere Luft geregelt zugeführt, und zwar in einer Menge, daß eine zumindest weitgehend stöchiometrische Verbrennung möglich ist. Die Regelung erfolgt mittels einer Sauerstoffsonde 35 und eines Reglers 36, der seinerseits einen Frequenzumformer 37 steuert, der dem Antriebsmotor des Gebläses aufgeschaltet ist. Durch die erhebliche Verlängerung der Strömungswege und der Verweilzeit der Abgase bis zum Ausgang der Gutvorwärmer 13 und 14 erfolgt schließlich eine zumindest weitgehend stöchiometrische Verbrennung bzw. Oxidation der restlichen Brennstoffmengen einschließlich der Sekundärbrennstoffe, die ebenso wie die weitgehende Reduktion des restlichen NOₓ spätestens am Gasausgang der Gutvorwärmer 13 bzw. 14 abgeschlossen ist. Es ist natürlich möglich, auch Sauerstoff oder mit Sauerstoff angereicherte Luft zu verwenden, so daß die Abgasmenge verringert wird. Oberhalb von etwa 600 °C erfolgt eine Verbrennung, unterhalb von etwa 600 °C eine Oxidation.

In Figur 3 sind die entgegengesetzten Strömungswege der vorgewärmten Verbrennungsluft (Pfeil 38) und der Abgase (Pfeil 39) dargestellt. Es ist ersichtlich, daß die gleichen Brennerlanzen 10 und 11 alternierend zur Zufuhr des Primär- und des Sekundärbrennstoffs eingesetzt werden, so daß zusätzliche Brennerlanzen nicht erforderlich sind.

### 1. Vergleichsbeispiel:

In einer Vorrichtung nach den Figuren 1 bis 3, jedoch ohne Reduzierung des NOₓ-Gehalts, wurden 240 Tagestonnen Beschickungsgut aus Gemenge mit einem Scherbenanteil von 70 % bei einem Wirkungsgrad der Schmelzwanne von 50 % aufgeschmolzen. Der theoretische Energieverbrauch betrug 2.430 kJ/kg Glas, der tatsächliche Energieverbrauch betrug 4.860 kJ/kg Glas. Die theoretische Abgasmenge mit 0 % O₂ betrug 14.175 Nm³/h und mit 4 % O₂ = 17.506 Nm³/h. Die Gemengegase beliefen sich auf 923 Nm³/h. Insgesamt wurden 18.429 Nm³/h Gase abgegeben.

Die Guttemperatur hinter dem Gutvorwärmer betrug 250 °C. Daraus errechnet sich eine durch das Schmelzgut eingebrachte Energiemenge von 2.310.000 kJ/h und eine Energieeinsparung in der Wanne bei einem Wirkungsgrad von 50 % = 4.620.000 kJ/h. Die Einsparung an Brenngas betrug 128 Nm³/h. Die Abgasmenge bei 4 % O₂ betrug 15.846 Nm³/h. Bei einer Freisetzung von Gemengegasen von 923 Nm³/h ergab sich eine gesamte Abgasmenge von 16.767 Nm³/h. Der Wirkungsgrad der Wanne betrug 55 %.

### 2. Beispiel:

In einer Vorrichtung nach den Figuren 1 bis 3, jedoch mit Reduzierung des NOₓ-Gehalts, wurden 240 Tagestonnen Beschickungsgut aus Gemenge mit einem Scherbenanteil von 70 % bei einem Wirkungsgrad der Schmelzwanne von 50 % aufgeschmolzen. Der theoretische Energieverbrauch betrug 2.430 kJ/kg Glas, der tatsächliche Energieverbrauch betrug 4.860 kJ/kg Glas. Die theoretische Abgasmenge mit 0 % O₂ betrug 14.175 Nm³/h und mit 4 % O₂ = 17.506 Nm³/h. Die Gemengegase beliefen sich auf 923 Nm³/h. Insgesamt wurden 18.429 Nm³/h Gase abgegeben.

Die Guttemperatur hinter dem Gutvorwärmer betrug durch Einsatz von Sekundärbrennstoff 450 °C. Daraus errechnet sich eine durch das Schmelzgut eingebrachte Energiemenge von 4.500.000 kJ/h und eine Energieeinsparung in der Wanne bei einem Wirkungsgrad von 50 % = 9.000.000 kJ/h. Die Einsparung an Brenngas betrug 250 Nm³/h. Die Abgasmenge bei 4 % O₂ betrug 14.264 Nm³/h. Bei einer Freisetzung von Gemengegasen von 923 Nm³/h ergab sich eine gesamte Abgasmenge von 15.187 Nm³/h. Der Wirkungsgrad der Wanne betrug 61,3 %.

### 3. Beispiel:

Der Versuch nach Beispiel 2 wurde wiederholt, jedoch mit dem Unterschied, daß die Abgastemperatur durch Zugabe einer größeren Mengen an Sekundärgas auf 600 °C angehoben wurde:

Die Guttemperatur hinter dem Gutvorwärmer betrug durch Einsatz von 127 Nm³/h Sekundärbrennstoff 600 °C. Die Abgasmenge bei 4 % O₂ betrug 16.834 Nm³/h. Die Abgastemperatur hinter dem Gutvorwärmer betrug - unter Berücksichtigung von Vorwärmverlusten 386 °C und die gesamte Brenngasmenge 1.227 Nm³/h, entsprechend 4.416 kJ/kg Glas. Der Wirkungsgrad der Wanne betrug 55,02 %.

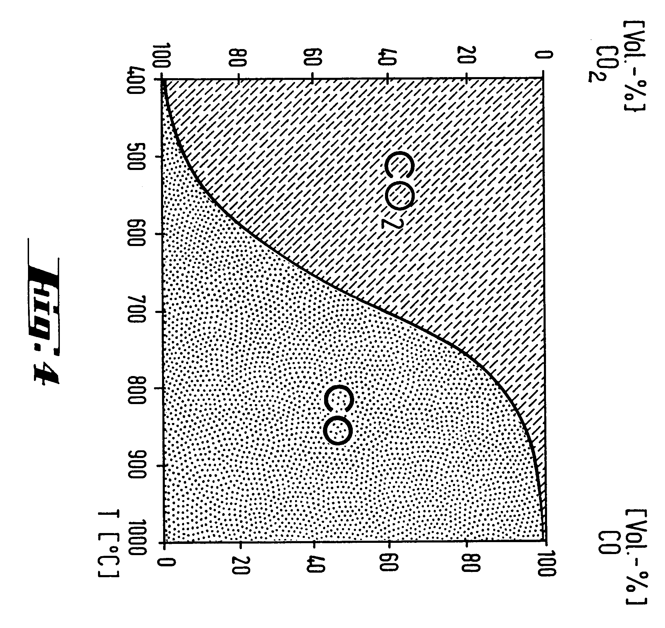

Figur 4 zeigt das sogenannte Boudouardsche Gleichgewichtsdiagramm, das zur Erläuterung des Vorgangs der Oxidation von CO zu CO₂ dient. Auf der Abszisse ist die Temperatur von 400 bis 1000 °C aufgetragen, auf der linken Ordinate der relative Volumensanteil von CO₂, auf der rechten Ordinate der relative Volumensanteil von CO. [Quelle: "Lehrbuch der anorganischen Chemie" von Hollemann/Wiberg, 1958, Seite 306, Verlag: Walter de Gruyter & Co, Berlin.]

Das Diagramm zeigt, daß sich in Gegenwart von Kohlenstoff oder Kohlenstoffverbindungen oberhalb von 400 °C mit steigenden Temperaturen das Gleichgewicht sehr stark von CO₂ in Richtung CO verschiebt. So besteht bei 650 °C ein Gleichgewicht zwischen etwa 60 Vol.-% CO₂ und 40 Vol.-% CO. Daraus geht hervor, daß bei den energetisch günstigen Abgastemperaturen für eine möglichst hohe Gutvorwärmung die unerwünschte Bildung von CO in den Abgasen stark zunimmt.

Die überraschende Wirkung des Erfindungsgegenstandes beruht demgegenüber auf der erfindungsgemäßen Temperaturregelung durch die Menge des Sekundärbrennstoffs relativ zum Primärbrennstoff in Verbindung mit dem Einsatz des Gutvorwärmers in der Abgasstrecke. Durch deren kombinatorisches Zusammenwirken ist gewährleistet, daß die Temperatur des Abgases in einem günstigen Bereich liegt, in dem infolge des Boudouardschen Gleichgewichts die Verschiebung von CO zu CO₂ noch in einem günstigen Zeitrahmen abläuft, und daß die Verweilzeit durch die zusätzlichen Strömungswege in den Gutvorwärmern so verlängert wird, daß auch das CO fast quantitativ zu CO₂ aufoxidiert wird, ohne daß die Luft in einem unzugänglichen Teil der Regenerationskammer zugegeben werden müßte.

Die Verringerung des CO-Gehalts erfolgt zeitlich versetzt gegenüber der Verringerung des NOₓ-Gehalts, und zwar durch die Oxidation des entstehenden CO bei verringerter Gasgeschwindigkeit in den Gutvorwärmern bei Temperaturen, bei denen die CO-Oxidation auch ohne Verbrennung noch ausreichend schnell abläuft.

Die Erfindung läßt sich kurz wie folgt zusammenfassen:

Beim Schmelzen von Glas aus Beschickungsgut 12 in Wannenöfen 1 mit Brennern 10 und 11 und mit Regeneratoren 5 und 6 für die Wiedergewinnung von Abwärme werden im Bereich der Flammenwurzeln Sauerstoff und Primärbrennstoffe zur Deckung des Wärmebedarfs für den Schmelzprozeß bei schwach unterstöchiometrischen Bedingungen zugeführt. Zur weiteren Reduzierung der Gehalte an NOₓ und CO in den Abgasen durch Nachverbrennung bzw. Nachoxidation jenseits der Flammenenden werden Sekundärbrennstoffe und stromabwärts weitere Luft zugeführt, um durch den Sekundärbrennstoff in oder über der Kammergitterung 5a und 6a NOₓ zu reduzieren und stromabwärt durch die Luftzufuhr eine Nachverbrennung bzw. Nachoxidation des CO durchzuführen, so daß schließlich eine zumindest weitgehend stöchiometrische Verbrennung erfolgt. Die Abgase werden vor dem Eintritt in einen Abgaskamin 15 zur Vorwärmung des Beschickungsguts in mindestens einem Gutvorwärmer 13 und 14 verwendet. Um eine nahezu vollständige Rückgewinnung der Energieinhalte der Brennstoffe und einen kontinuierlichen Strom des Beschickungsguts zu gewährleisten, wird die Temperatur der aus den Regeneratoren 5 und 6 stammenden Abgase vor dem Eintritt in den mindestens einen Gutvorwärmer 13 und 14 gemessen, und die Menge der Sekundärbrennstoffe wird in Abhängigkeit von den gemessenen Temperaturwerten geregelt.

Der Sekundärbrennstoff braucht dabei nicht mit dem Primärbrennstoff identisch zu sein; als Sekundärbrennstoff kann bevorzugt Methan verwendet werden. Als Gutvorwärmer können alle bekannten Geräte wie direkte und indirekte Wärmetauscher verwendet werden; besonders bevorzugt sind jedoch solche Gutvorwärmer, die relativ zur Gutmenge pro Zeiteinheit einen besonders großen Querschnitt und damit eine große Verweilzeit von Gut und Abgasen mit sich bringen.

### Bezugszeichen-Liste:

- 1: U-Flammenwannenofen
- 2: Beschickungsende
- 2a: Dog-house
- 2b: Dog-house
- 3: Entnahmeende
- 4: Verteilerwanne
- 5: Regenerator
- 5a: Kammergitterung
- 5b: Primärluftöffnung
- 6: Regenerator
- 6a: Kammergitterung
- 6b: Primärluftöffnung
- 7: Strömungskanal
- 7a: Brennermaul
- 8: Strömungskanal
- 8a: Brennermaul
- 9: Brennraum
- 10: Brennerlanzen
- 11: Brennerlanzen
- 12: Beschickungsgut
- 13: Gutvorwärmer
- 14: Gutvorwärmer
- 15: Abgaskamin
- 16: Abgasleitung
- 16a: Abgasleitung
- 16b: Abgasleitung
- 17: Gebläse
- 18: Temperaturfühler
- 18a: Ausgang
- 19: Steueranordnung
- 20: Regler
- 20a: Umschalter
- 20b: Leitung
- 21: Regelventil
- 22: Mengenmesser
- 23: Bypass-Leitung
- 24: Absperrventil
- 25: Absperrventil
- 26: Absperrventil
- 27: Hauptleitung
- 28: Silo
- 29: Vibrationsförderer
- 30: Abgasleitung
- 30a: Abgasleitung
- 30b: Abgasleitung
- 30c: Einmündungsstelle
- 31: Haupt-Abgasleitung
- 32: Schieberventil
- 33: Kammersockel
- 34: Gebläse
- 35: Sauerstoffsonde
- 36: Regler
- 37: Frequenzumformer
- 38: Pfeil
- 39: Pfeil

## Patentansprüche

1. Verfahren zum Schmelzen von Glas aus Beschickungsgut (12) in U-Flammen- und Querflammenwannenöfen mit Brennern (10, 11) für fossile Brennstoffe und mit Regeneratoren (5, 6) für die Wiedergewinnung von Abwärme zum Vorwärmen der Verbrennungsluft, wobei im Bereich der Flammenwurzeln vorgegebene Mengen von Sauerstoff und Primärbrennstoffen zur Deckung des Wärmebedarfs für den Schmelzprozeß bei schwach unterstöchiometrischen Bedingungen zugeführt werden, wobei zur weiteren Reduzierung der Gehalte an NOₓ und CO in den Abgasen durch Nachverbrennung jenseits der Flammen-Enden Sekundärbrennstoffe und stromabwärts weitere Luft zugeführt werden, derart, daß schließlich eine zumindest weitgehend stächiometrische Verbrennung erfolgt, und wobei die Abgase vor dem Eintritt in einen Abgaskamin (15) zur Vorwärmung des Beschickungsguts (12) in mindestens einem Gutvorwärmer (13, 14) verwendet werden,
**dadurch gekennzeichnet**, daß die Temperatur der aus den Regeneratoren (5, 6) stammenden Abgase vor dem Eintritt in den mindestens einen Gutvorwärmer (13, 14) gemessen wird und daß die Menge der Sekundärbrennstoffe in Abhängigkeit von den gemessenen Temperaturwerten so geregelt wird, daß die Temperatur der Abgase vor dem Eintritt in den mindestens einen Gutvorwärmer (13, 15) mindestens 400 °C beträgt und möglichst knapp unter derjenigen Temperatur liegt, bei der das Beschickungsgut (12) zum Verkleben neigt.

2. Verfahren nach Anspruch 1, **dadurch gekennzeichnet**, daß Verbrennungsluft zur Nachverbrennung unterhalb von Kammergitterungen (5a, 6a) der Regeneratoren (5, 6) in die Abgase eingespeist wird.

3. Verfahren nach Anspruch 2, **dadurch gekennzeichnet**, daß die Nachoxidation mindestens teilweise in dem mindestens einen Gutvorwärmer (13, 14) durchgeführt wird.

4. Verfahren nach Anspruch 1, **dadurch gekennzeichnet**, daß die den Brennern (10, 11) zugeführten Mengen an Primär- und Sekundärbrennstoffen in der Weise geregelt werden, daß während der Phase der Wannenbeheizung schmelzbedingte Mengen an Primärbrennstoffen über eine Hauptgasleitung (27) mit einem ersten geöffneten Absperrventil (26) zugeführt werden und daß während der Phase der Nachverbrennung über eine zur Hauptgasleitung (27) parallele Bypass-Leitung (23) mit einem Regelventil (21) und mit mindestens einem zweiten geöffneten Absperrventil (24, 25) nach Maßgabe der Temperaturmessung der Abgase vor dem Eintritt in den Gutvorwärmer (13, 14) mittels des Regelventils (21) solche Mengen an Sekundärbrennstoffen zugeführt werden, daß die Temperatur der Abgase vor dem Eintritt in den Gutvorwärmer (13, 14) mindestens 400 °C beträgt und möglichst knapp unter derjenigen Temperatur liegt, bei der das Beschickungsgut (12) zum Verkleben neigt, und daß die Absperrventile (26, 24, 25) in der Hauptleitung (27) und in der Bypass-Leitung (23) nach Maßgabe der Strömungsrichtungsumkehr der Verbrennungsgase über der Glasschmelze alternierend umgeschaltet werden.

5. Regelanordnung für Verfahren zum Schmelzen von Glas aus Beschickungsgut (12) in U-Flammen- und Querflammenwannenöfen mit Brennern (10, 13) für fossile Brennstoffe und mit Regeneratoren (5, 6) für die Wiedergewinnung von Abwärme zum Vorwärmen der Verbrennungsluft, wobei im Bereich der Flammenwurzeln vorgegebene Mengen von Sauerstoff und Primärbrennstoffen zur Deckung des Wärmebedarfs für den Schmelzprozeß zuführbar sind, wobei zur weiteren Reduzierung der Gehalte an NOₓ und CO in den Abgasen durch Nachverbrennung und/oder Nachoxidation jenseits der Flammenenden Sekundärbrennstoffe und stromabwärts weitere Luft zuführbar sind, derart, daß schließlich eine zumindest weitgehend stöchiometrische Verbrennung erfolgt, und wobei die Abgase vor dem Eintritt in einen Abgaskamin (15) zur Vorwärmung des Beschickungsguts (12) mindestens einem Gutvorwärmer (13, 14) zuführbar sind,
**dadurch gekennzeichnet**, daß in je einer Abgasleitung (16) für die aus dem betreffenden Regenerator (5, 6) stammenden Abgase vor dem Eintritt in den mindestens einen Gutvorwärmer (13, 14) je ein Temperaturfühler (18) zum Messen der Abgastemperatur angeordnet ist, daß der Ausgang (18a) des Temperaturfühlers (18) einer Steueranordnung (19) mit einem Regler (20) und einem Regelventil (21) aufgeschaltet ist, durch die die Menge der Sekundärbrennstoffe in Abhängigkeit von den gemessenen Temperaturwerten derart regelbar ist, daß die Temperatur der Abgase vor dem Eintritt in jeden Gutvorwärmer (13, 14) mindestens 400 °C beträgt und möglichst knapp unter derjenigen Temperatur liegt, bei der das Beschickungsgut (12) zum Verkleben neigt.

6. Anordnung nach Anspruch 5, **dadurch gekennzeichnet**, daß in jedem Regelsystem zur Regelung der den Brennern (10, 11) zugeführten Mengen an Primär- und Sekundärbrennstoffen
a) eine Hauptgasleitung (27) für die Primärbrennstoffe mit einem ersten Absperrventil (26) und
b) eine zur Hauptgasleitung (27) parallele Bypass-Leitung (23) für die Sekundärbrennstoffe mit einer Steueranordnung (19) und einem Regelventil (21) und mit mindestens einem zweiten Absperrventil (24, 25) vorgesehen sind, daß
c) der Ausgang (18a) des Temperaturfühlers (18) der Steueranordnung und dem Regelventil (21) in der Bypass-Leitung (23) über einen Regler (20) in der Weise aufgeschaltet ist, daß den Abgasen vor dem Eintritt in den Gutvorwärmer (13, 14) mittels des Regelventils (21) solche Mengen an Sekundärbrennstoffen zuführbar sind, daß die Temperatur der Abgase vor dem Eintritt in den Gutvorwärmer (13, 14) mindestens 400 °C beträgt und möglichst knapp unter derjenigen Temperatur liegt, bei der das Beschickungsgut (12) zum Verkleben neigt, und daß
d) die Absperrventile (26, 24, 25) in der Hauptleitung (27) und in der Bypass-Leitung (23) nach Maßgabe der Strömungsrichtungsumkehr der Verbrennunggase über der Glasschmelze durch eine Steueranordnung alternierend umschaltbar sind.
